Europäisches Patentamt

European Patent Office

Office européen des brevets

(19)

(11) Veröffentlichungsnummer: **0 081 121**
**B1**

(12) # EUROPÄISCHE PATENTSCHRIFT

(45) Veröffentlichungstag der Patentschrift:
14.08.85

(51) Int. Cl.⁴: **A 01 B 35/24**

(21) Anmeldenummer: 82110700.0

(22) Anmeldetag: 19.11.82

(54) **Federzinken.**

(30) Priorität: 05.12.81 DE 3148260

(43) Veröffentlichungstag der Anmeldung:
15.06.83 Patentblatt 83/24

(45) Bekanntmachung des Hinweises auf die Patenterteilung:
14.08.85 Patentblatt 85/33

(84) Benannte Vertragsstaaten:
AT BE CH DE FR GB IT LI LU NL SE

(56) Entgegenhaltungen:
DE - B - 1 757 146
DE - U - 6 941 324
DE - U - 7 212 348
DE - U - 7 320 747

Konstruktionselemente des Maschinenbaues, Seite 186
Maschinenelemente, Seiten 235-237

(73) Patentinhaber: Krupp Brüninghaus GmbH, Im Ohl 3,
D-5980 Werdohl (DE)

(72) Erfinder: Hegemann, Fritz, Dr.-Ing.,
Eichendorffstrasse 27, D-5980 Werdohl (DE)
Erfinder: Beihammer, Horst, Ing. grad., Untere
Hesmecke 8, D-5980 Werdohl (DE)

(74) Vertreter: Brake, Klaus, Dipl.-Ing., Kreuzstrasse 32,
D-4800 Bielefeld 1 (DE)

ACTORUM AG

## Beschreibung

Die Erfindung betrifft einen Federzinken für landwirtschaftliche Geräte zur Bodenbearbeitung, wie Eggen, Grubber od. dgl., mit einem gebogenen Federblatt, dessen oberes Ende als Befestigungsstelle für die lösbare Befestigung an dem Gerät ausgebildet ist und dessen unteres Ende mit einem Träger für die Anbringung eines Bearbeitungsteils, wie Eggenspitze, Schar od. dgl., lösbar oder unlösbar verbunden ist.

Ein mit Federzinken ausgerüstetes landwirtschaftliches Gerät zur Bodenbearbeitung wird mit Hilfe eines Schleppers über den Boden gezogen. Dabei greifen die Bearbeitungsteile der Federzinken in den Boden ein und lockern diesen auf. Wenn ein Bearbeitungsteil auf ein festes Hindernis im Boden auftrifft, verformt sich der Federzinken mit Hilfe seines Federblattes elastisch. Das Bearbeitungsteil kann dann dem Hindernis ausweichen.

Aus der DE-B 1757146 ist ein Federzinken der eingangs genannten Art bekannt. Das Federblatt dieses Federzinkens hat einen über die Länge konstanten Querschnitt, der mit zwei parallelen Langseiten und mit zwei gegenüberliegenden Kurzseiten nahezu rechteckig ist. Der Nachteil dieses bekannten Federzinkens besteht darin, dass sein Federblatt mit dem konstanten Querschnitt spannungsmässig schlecht ausgenutzt ist. Bei einer Auslenkung des Federzinkens entstehen längs des Federblattes unterschiedliche Spannungen, da längs des Federblattes unterschiedlich Biegemomente auftreten. Die Stelle grösster Spannung befindet sich in dem am weitesten vom Kraftangriffspunkt im Boden entfernten Querschnitt, da das Biegemoment bekanntlich aus Kraft mal Hebelarm zusammengesetzt ist. Bei einem Federblatt mit konstantem Querschnitt ist also dieser oberste Querschnitt die Stelle maximaler Spannung und damit die Stelle, an der das Federblatt am stärksten bruchgefährdet ist. Bei den bekannten Federzinken besteht, um die Bruchgefahr zu vermindern, nur die Möglichkeit, das Federblatt durch ein zweites Federblatt zu verstärken oder die konstante Dicke des Federblattes im ganzen zu vergrössern, was aber eine schlechte Materialausnutzung des Federstahls zur Folge hat.

Der Erfindung liegt die Aufgabe zugrunde, den Federzinken so weiterzuentwickeln, dass im hauptsächlich federungswirksamen Teil in allen Querschnitten nahezu dieselbe Spannung in Abhängigkeit von der veränderlichen Federkraft auftritt, um eine gute Materialausnutzung des Federwerkstoffes zu erhalten und die Bruchgefahr des Federblattes zu verringern.

Diese Aufgabe wird erfindungsgemäss dadurch gelöst, dass das Federblatt einen über seine Länge veränderlichen Querschnitt aufweist, wobei das axiale Flächenträgheitsmoment I des Querschnitts, geteilt durch die halbe Blattdicke, proportional dem Abstand 1 des Querschnitts von der Wirkungslinie der Federkraft F ist.

Das Federblatt weist bevorzugt eine über seine Länge veränderliche Blattdicke bei konstanter Blattbreite auf. Es kann aber auch eine über seine Länge veränderliche Blattbreite bei konstanter Blattdicke haben.

Vorteilhaft ist der über die Länge des Federblattes veränderliche Blattdicken- bzw. Blattbreitenverlauf durch spanlose oder spanende Formgebung hergestellt. Für die spanlose Formgebung ist dabei vorteilhaft das Auswalzen vorgesehen.

Da die Spannung und somit auch die Verformung des Federblattes im hauptsächlich federungswirksamen Bereich annähernd konstant sind, lassen sich das elastische Verformungsvermögen und die Lebensdauer des Federzinkens durch ein gezieltes Vorverformen in Richtung seiner späteren Belastung über die Fliessgrenze des Werkstoffs hinaus wesentlich steigern. Dieser Vorgang ist in der Fachliteratur unter dem Namen „Vorsetzen" bekannt.

Ausführungsbeispiele der Erfindung sind in der Zeichnung dargestellt und werden im folgenden näher beschrieben. Es zeigen:

Fig. 1 eine Seitenansicht eines Federzinkens, dessen Federblatt eine über die Länge veränderliche Blattdicke bei konstanter Blattbreite aufweist und mit dem Träger einstückig ausgeführt ist;

Fig. 2 eine Seitenansicht des Federzinkens gemäss Fig. 1, wobei jedoch der Träger und das Federblatt durch Verschraubung miteinander verbunden sind;

Fig. 3 eine Seitenansicht eines Federblattes mit über die Länge veränderlicher Blattdicke bei konstanter Blattbreite in einstückiger Ausführung mit dem in gleicher Richtung wie das Federblatt gekrümmten Träger;

Fig. 4 eine Seitenansicht eines Federblattes gemäss Fig. 1, bei welchem nicht die Blattdicke, sondern die Blattbreite über die Länge veränderlich ist;

Fig. 5 eine Vorderansicht des Federzinkens gemäss Fig. 4;

Fig. 6 eine schematische Seitenansicht eines Federzinkens mit Masslinien für die Berechnung von Federblattdicke und Federblattbreite.

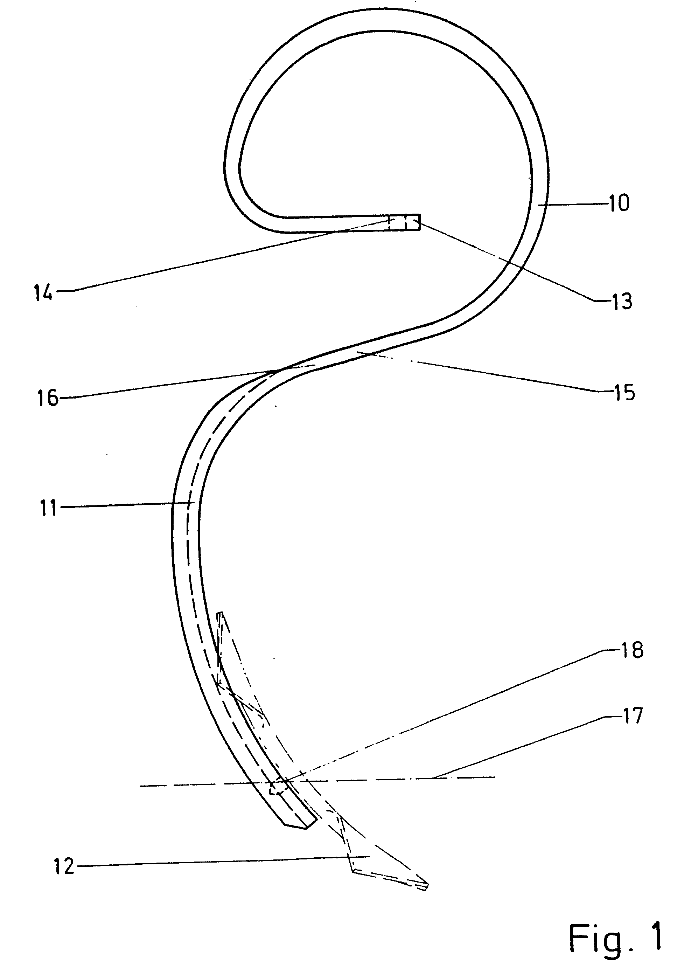

Der Federzinken gemäss Fig. 1 ist einstückig aus einem Federblatt 10 und einem Träger 11 für ein anzubringendes Bearbeitungsteil 12 ausgebildet. Das Federblatt 10 befindet sich im oberen Bereich, sein oberes Ende 13 ist eingerollt und weist eine Bohrung 14 auf, durch welche eine Befestigungsschraube zum Befestigen des Federzinkens an einem Tragbalken des Gerätes hindurchgesteckt werden kann. Das Federblatt 10 besteht aus einem Federstahl konstanter Breite und über die Länge veränderlicher Dicke. Es ist in einer Richtung gebogen und geht mit seinem unteren Ende 15 in einem Wendepunkt in den in der anderen Richtung gebogenen Träger 11 über. Im Ausführungsbeispiel ist der Träger gefaltet. Es ist auch möglich, Träger zu verwenden, die nicht gefaltet sind.

Am unteren Ende des Trägers 11 ist das Bearbeitungsteil 12 lösbar angebracht. Dieses greift in den Boden ein, so dass hier längs einer Wirkungslinie 17 im Angriffspunkt 18 die resultierende Federkraft angreift. Der über die Länge des Federblattes 10 veränderliche Querschnitt oder, da die Breite des Federblattes 10 konstant ist, die veränderliche Dicke ändert sich mit dem Abstand des Querschnitts von der Wirkungslinie 17 der resultierenden Federkraft entsprechend den mechanischen Gesetzen. Auf diese Weise ergibt sich in allen Querschnitten des Federblattes 10 während des Federns die gleiche Beanspruchung, so dass es eine Stelle grösster Beanspruchung, welche die vorbekannte Feder in ihrem von der Wirkungslinie der Federkraft am weitesten entfernten Querschnitt hat, bei der erfindungsgemässen Feder nicht mehr gibt. Die erfindungsgemässe Ausbildung des Federblattes 10 hat daher eine besonders gute Materialausnutzung des Federstahls zur Folge.

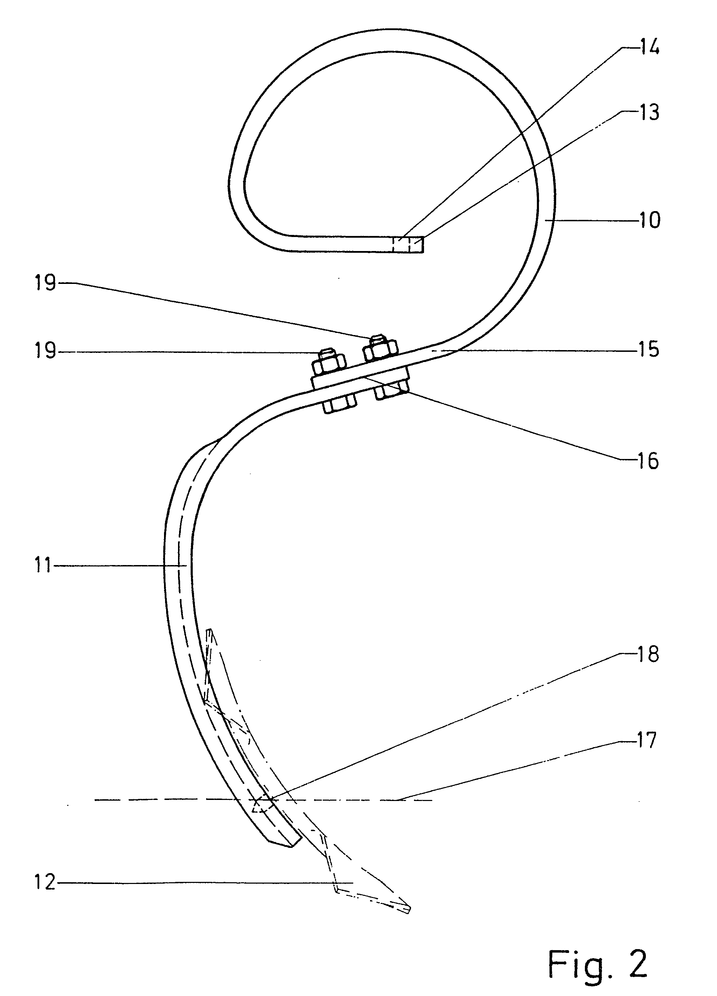

Der Federzinken gemäss Fig. 2 der Zeichnung ist grundsätzlich genauso aufgebaut. Er ist jedoch im Bereich des Wendepunktes 16 am unteren Ende 15 des Federblattes 10 geteilt ausgeführt, so dass es ausser dem Teil Federblatt 10 das Teil Träger 11 gibt. Diese beiden Teile sind mit Hilfe von Schrauben 19 lösbar aneinander befestigt.

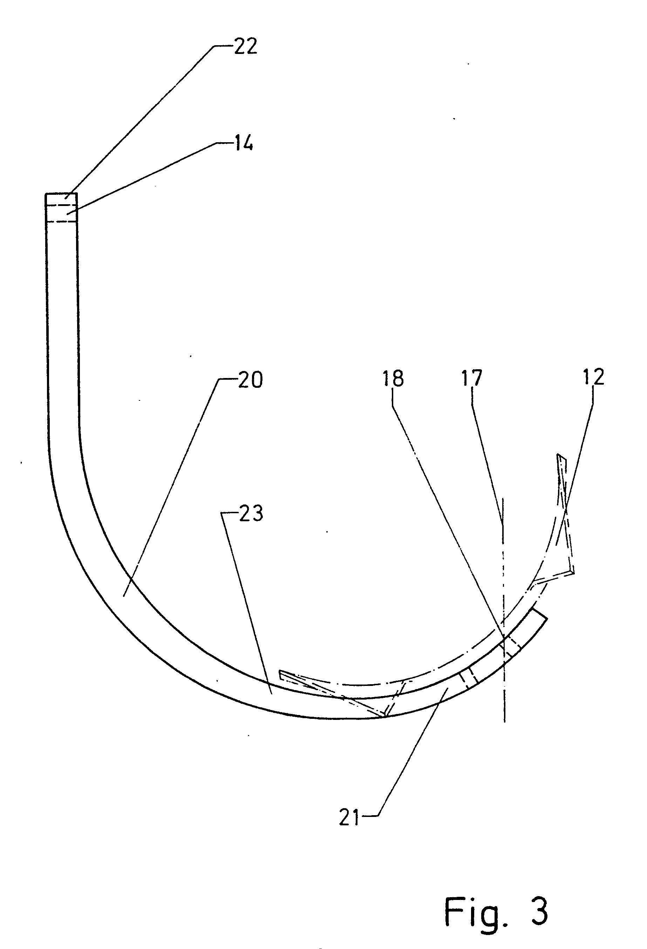

Der Federzinken gemäss Fig. 3 der Zeichnung ist mit seinem Federblatt 20 und dem am unteren Ende des Federblattes angrenzenden Träger 21 für das Bearbeitungsteil 12 einstückig ausgeführt. Das Federblatt 20 beginnt mit seinem oberen Ende 22, an dem sich die Bohrung 14 zum Befestigen an dem Tragbalken befindet, mit einem waagerechten Verlauf, ist dann in einer Richtung gekrümmt bis zum unteren Ende 23, wo sich der Träger 21 mit einem in derselben Richtung gekrümmten Verlauf anschliesst und mit seinem unteren Ende mit dem Angriffspunkt 18 der Federkraft in den Bereich der Wirkungslinie 17 gelangt. Die Befestigung des Federblattes 20 mit seinem oberen Ende 22 an dem Tragbalken kann federnd erfolgen.

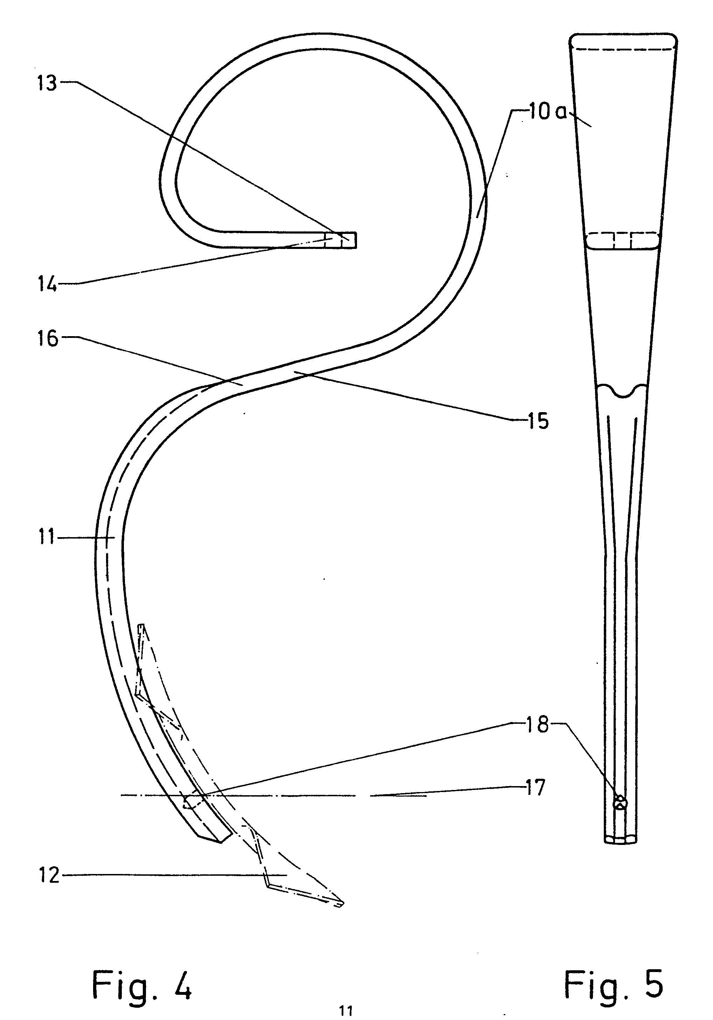

Der Federzinken gemäss Fig. 4 und 5 der Zeichnung weist ein Federblatt 10a auf, welches nicht in seiner Dicke veränderlich und in seiner Breite konstant ist, wie das Federblatt gemäss Fig. 1, sondern welches eine veränderliche Blattbreite und eine konstante Blattdicke hat. Ausserdem wird hier nicht ein Federblatt mit exakt rechteckigem Querschnitt, sondern mit einem mit abgerundeten Schmalseiten ausgeführten Querschnitt, beispielsweise nach DIN 59145 verwendet. Dadurch werden die von scharfen Kanten üblicherweise ausgehenden Kerbwirkungen vermieden.

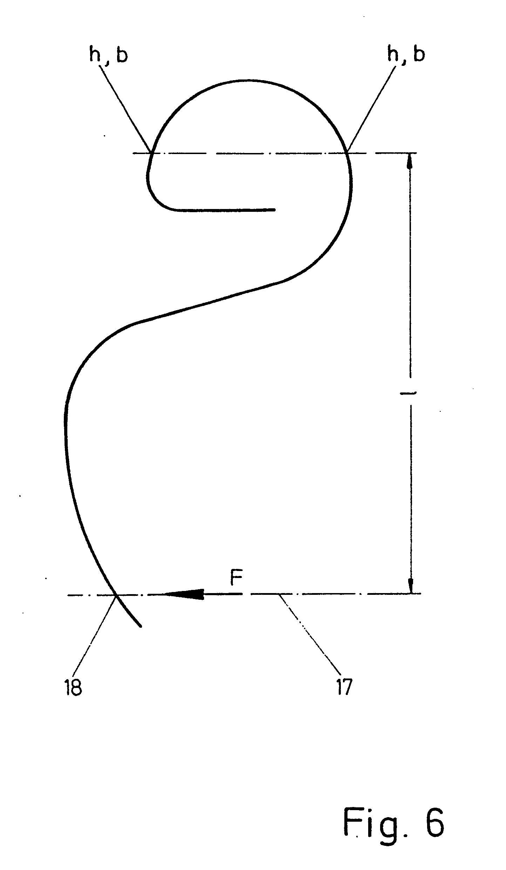

In der schematischen Darstellung gemäss Fig.6 der Zeichnung ist F die Federkraft, l die Länge des Abstandes eines bestimmten Federblattquerschnitts von der Wirkungslinie 17 der Federkraft und h die Blattdicke in diesem Federblattquerschnitt. Für die Biegespannung gilt die Gleichung

$$\sigma = \frac{M}{W} = \frac{F \cdot l}{W} = \frac{F \cdot l \cdot h}{2 \cdot l}$$

Hierin ist M = Biegemoment, W = Widerstandsmoment, und l = axiales Flächenträgheitsmoment des Federblattquerschnitts.

Für das Widerstandsmoment gilt die Gleichung

$$W = \frac{2 \cdot l}{h}$$

und für das axiale Flächenträgheitsmoment eines Rechteckquerschnittes mit halbkreisförmigen Schmalseiten nach DIN 59145

$$I = \frac{b \cdot h^3}{12} \cdot \left(1 - 0{,}411 \cdot \frac{h}{b}\right)$$

Hierin b = Blattsbreite des Federblattquerschnitts.

## Patentansprüche

1. Federzinken für landwirtschaftliche Geräte zur Bodenbearbeitung, wie Eggen, Grubber od. dgl., mit einem gebogenen Federblatt (10, 10a, 20), dessen oberes Ende (13) als Befestigung stelle (14) für die lösbare Befestigung an dem Gerät ausgebildet ist und dessen unteres Ende (15) mit einem Träger (11, 21) für die Anbringung eines Bearbeitungsteils (12), wie Eggenspitze, Schar od. dgl., lösbar oder unlösbar verbunden ist, dadurch gekennzeichnet, dass das Federblatt (10, 10a, 20) einen über seine Länge veränderlichen Querschnitt aufweist, wobei das axiale Flächenträgheitsmoment (I) des Querschnitts, geteilt durch die halbe Blattdicke (h), proportional dem Abstand (l) des Querschnitts von der Wirkungslinie (17) der Federkraft (F) ist.

2. Federzinken nach Anspruch 1, dadurch gekennzeichnet, dass das Federblatt (10, 20) eine über seine Länge veränderliche Blattdicke (h) bei konstanter Blattbreite (h) aufweist.

3. Federzinken nach Anspruch 1, dadurch gekennzeichnet, dass das Federblatt (10a) eine über seine Länge veränderliche Blattbreite (b) bei konstanter Blattdicke (h) aufweist.

4. Federzinken nach den Ansprüchen 1 bis 3, dadurch gekennzeichnet, dass der über die Länge des Federblattes (10, 20, 10a) veränderliche Blattdicken- bzw. Blattbreitenverlauf durch spanlose Formgebung wie Auswalzen hergestellt ist.

5. Federzinken nach den Ansprüchen 1 bis 3, dadurch gekennzeichnet, dass der über die Länge des Federblattes (10, 20, 10a) veränderliche Blattdicken- bzw. Blattbreitenverlauf durch spanende Bearbeitung hergestellt ist.

## Claims

1. Spring tine for agricultural implements for soil treatment, such as harrows, cultivators or the like, with a bent spring blade (10, 10a, 20), the upper end (13) of which is constructed as fastening place (4) for the detachable fastening to the implement and the lower end (15) of which is detachably or undetachably connected with a carrier (11, 21) for the mounting of a working part (12), such as harrow point, blade or the like, characterised thereby, that the spring blade (10, 10a, 20) displays a cross-section varying over its length, wherein the axial area moment of inertia (I) of the cross-section divided by half the blade thickness (h) is proportional to the spacing (I) of the cross-section from the line of action (17) of the spring force (F).

2. Spring tine according to Claim 1, characterised thereby, that the spring blade (10, 20) displays a blade thickness (h) varying over its length with constant blade width (b).

3. Spring tine according to Claim 1, characterised thereby, that the spring blade (10a) displays a blade width (b) varying over its length with constant blade thickness (h).

4. Spring tine according to the Claims 1 to 3, characterised thereby, that the course of the blade thickness or of the blade width varying over the length of the spring blade (10, 10a, 20) is produced through non-cutting shaping such as rolling.

5. Spring tine according to the Claims 1 to 3, characterised thereby, that the course of the blade thickness or of the blade width varying over the length of the spring blade (10, 10a, 20) is produced by cutting treatment.

## Revendications

1. Dent flexible pour outils agricoles destinés au travail du sol, tels que des herses, des cultivateurs ou des appareils analogues, comprenant une lame de ressort courbée (10, 10a, 20) dont l'extrémité supérieure (13) est réalisée sous la forme d'un emplacement (14) pour la fixation détachable sur l'outil et dont l'extrémité inférieure (15) est reliée de manière détachable ou non détachable à un support (11, 21) pour le montage d'une pièce de travail (12), telle qu'une pointe de herse, un soc ou un élément analogue, caractérisée en ce que la lame de ressort (10, 10a, 20) présente une section transversale variable sur sa longueur, le moment d'inertie géométrique axial (I) de la section transversale, divisé par la moitié de l'épaisseur (h) de la lame, étant proportionnel à la distance (l) entre la section transversale et la ligne d'action (17) de la force de ressort (F).

2. Dent flexible suivant la revendication 1, caractérisée en ce que la lame de ressort (10, 20) présente une épaisseur de lame (h) variable sur sa longueur pour une largeur de lame (b) constante.

3. Dent flexible suivant la revendication 1, caractérisée en ce que la lame de ressort (10a) présente une largeur de lame (b) variable sur sa longueur pour une épaisseur de lame (h) constante.

4. Dent flexible suivant l'une des revendications 1 à 3, caractérisée en ce que l'allure de l'épaisseur ou de la largeur de lame variable sur la longueur de la lame de ressort (10, 20, 10a) est réalisée par un façonnage sans enlèvement de copeaux, tel qu'un laminage.

5. Dent flexible suivant l'une des revendications 1 à 3, caractérisée en ce que l'allure de l'épaisseur ou de la largeur de lame variable sur la longueur de la lame de ressort (10, 20, 10a) est réalisée par un traitement par enlèvement de copeaux.

Fig. 1

Fig. 2

22

14

20

18    17    12

23

21

Fig. 3

Fig. 4          Fig. 5

h , b          h , b

F

18          17

# Fig. 6